# EUROPEAN PATENT APPLICATION

(11) **EP 1 914 978 A2**
(43) Date of publication of application: **23.04.2008**
(21) Application number: 07019490.7
(22) Date of filing: 04.10.2007
(51) Int. Cl.: H04N 1/40

(54) **Image processing apparatus and image processing method**

(30) Priority: 19.10.2006 JP 2006284811; 19.10.2006 JP 2006284810
(71) Applicant: Murata Machinery, Ltd., 3 Minami Ochiai-cho, Kisshoin Minami-ku, Kyoto-shi, Kyoto (JP)
(72) Inventor: Takeuchi, Yoshihisa, Kyoto-shi Kyoto 612-8686 (JP); Minamino, Katsushi, Kyoto-shi Kyoto 612-8686 (JP)
(74) Representative: Schoppe, Fritz

(57) **Abstract**

The image processing apparatus includes a hue specifying unit, a pixel extracting unit and a luminance data converting unit. The hue specifying unit generates hue specification information that specifies a hue to be converted on the basis of a user operation. The pixel extracting unit extracts pixels having a hue specified by the hue specification information from the color image on the basis of the hue obtained from chromaticity data. The luminance data converting unit carries out processing on the luminance data of the pixels extracted in the pixel extracting step using a function which lowers the upper limit value of luminance and increases in a monotone within a predetermined range including the upper limit value to convert the luminance value, so that a monochrome image is generated from the color image.

## Description

### CROSS-REFERENCE TO RELATED APPLICATIONS

This application claims priority under 35 U.S.C 119 to Japanese Patent Application No2006-284811, filed on October 19, 2006, and Japanese Patent Application No. 2006-284810, filed on October 19, 2006, which application is hereby incorporated by reference in its entirety.

### BACKGROUND OF THE INVENTION

### 1. Field of the Invention

The present invention relates to an image processing apparatus and, more specifically, to an improved image processing apparatus which carries out image processing on a color image read from an original by an image pickup apparatus such as a scanner and outputs a monochrome image.

### 2. Description of the Related Art

In recent years, there is proposed an image reading apparatus which reads an original or the like with an object appearing in a specific color erased therefrom. In this image reading apparatus, a read image is generated without reading an object which appears in a predetermined color. Accordingly, an object such as guide lines preprinted in a specific color, for example, with red ink, in the original can be erased from the read image.

Recently, there is also proposed an image processing apparatus adapted to allow a user to specify parameters of hue, color saturation, lightness, and luminance, and convert luminance components of pixels which exist in the range of the specified hue, color saturation, lightness, and luminance into a white level (the upper limit value of luminance).

In recent years, there is also proposed an image processing apparatus adapted to convert a specific color in a color image read from an original into a white level to generate a monochrome image. The image processing apparatus includes an image reading unit that reads an image from an original, a color specifying unit that specifies a color, and an image processing unit that converts the specified color into a white level to generate a monochrome image. A first image processing apparatus carries out processing to extract pixels within a range of predetermined hue, color saturation, and lightness and convert the luminance components in the pixels into the white level. Accordingly, a monochrome image in which pixels in a specific color are whitened is obtained from a color image, so that an object in the original in the specific color, for example, guide lines preprinted in red ink is erased from the image data.

On the other hand, there is proposed a color printing apparatus adapted to increase color saturation of pixels having a hue within a predetermined range to emphasize a specific hue, and print a color image. This color printing apparatus allows a user to specify the range of hue in which the color saturation is to be increased in advance, and increases the color saturation of pixels having the hue within this range, so that the printed quality of the color image is improved.

### BRIEF SUMMARY OF THE INVENTION

The image data after image processing is normally binarized in the number of tones which represents the luminance component, and is printed as a monochrome image including binary data for each pixel. When binarizing the luminance component, pseudo tone display processing (halftone display processing) such as a dither method is carried out to reproduce the change of monochrome multi-valued tone in binary. In the image processing apparatus in this configuration, processing to convert into the white level is not carried out on the luminance components of the pixels out of the range of the hue, color saturation, lightness, and luminance specified by the user, and the processing to convert into the white level is carried out only on the luminance components of the pixels within the user-specified range. Therefore, the' luminance components of the pixels having the hue, color saturation, lightness, and luminance close to the user-specified range are not whitened and are outputted as image data. Consequently, there is a problem such that the boundary of the user-specified range has a high profile when printed as the monochrome image, so that it gives an unpleasant feeling to viewers.

In view of such circumstances, it is a first object of the present invention to provide an image processing apparatus which is able to whiten a specific color adequately when printing a color image read from an original in monochrome without causing an unpleasant feeling to viewers. Specifically, it is an object of the present invention to provide an image processing apparatus in which a boundary between black and white is restrained from having a high profile when being printed for pixels having user-specified hue when carrying out processing to convert a color image including luminance data and chromaticity data for each pixel into a white level. It is also an object of the present invention to provide an image processing apparatus which is able to restrain the boundary between the user-specified hue and a hue close to the user-specified hue in a color space from having a high profile.

When printing a color image read from an original by an image pickup apparatus such as a color scanner in monochrome, it is very convenient if it is possible to print while emphasizing a specific portion such as characters written in red in an original printed in black. In particular, if it is possible to print while emphasizing a specific portion such as characters written in red by increasing the density thereof and reducing the density of other portions printed in black, the portion written in red and the portion printed in black are conveniently distinguished even in the monochrome image.

In view of such circumstances, it is a second object of the present invention to provide an image processing apparatus which is capable of emphasizing a portion written in a specific color when printing a color image read from an original in monochrome. In particular, it is an object of the present invention to provide an image processing apparatus which is capable of emphasizing pixels having a user-specified hue when obtaining a monochrome image from a color image having luminance data and chromaticity data for each image. It is also an object of the present invention to provide an image processing apparatus which is capable of restraining the boundary between the user-specified hue and a hue close to the user-specified hue in color space from having a high profile.

In order to achieve the first object, an image processing apparatus carries out image processing on a color image having luminance data and chromaticity data for each pixel read from an original and outputs a monochrome image. The image processing apparatus includes a hue specifying unit, a pixel extracting unit and a luminance data converting unit. The hue specifying unit generates hue specification information which specifies a hue to be converted on the basis of a user operation. The pixel extracting unit extracts pixels having the hue specified by the hue specification information from the color image on the basis of the hue obtained from the chromaticity data. The luminance data converting unit carries out conversion processing on the luminance data of pixels extracted by the pixel extracting unit to saturate luminance values higher than a first threshold value and increase luminance values lower than the first threshold value, so that the monochrome image is generated from the color image.

In this image processing apparatus, the hue specification information is generated on the basis of the user operation, and the pixels having a hue specified by the hue specification information are extracted from the color image read from the original. Then, processing to convert the luminance data of the extracted pixels is carried out, so that the monochrome image is generated from the color image. The luminance data conversion processing is processing to saturate the luminance values higher than the first threshold value and increase the luminance values lower than the first threshold value. In this configuration, the luminance data is converted according to the luminance value thereof and the luminance values higher than the first threshold are changed to the upper limit value of the luminance for the pixels having the user-specified hue, the specific hue is whitened while restraining the boundary between the black and white from having a high profile when printed as the monochrome image.

The image processing apparatus is configured in such a manner that the luminance data converting unit brings luminance values in a range from the lower limit value to the first threshold value into correspondence with values obtained by multiplying the luminance values by a constant value.

The image processing apparatus is configured in such a manner that the luminance data converting unit saturates the luminance values higher than the first threshold value, increases the luminance values higher than a second threshold value which is smaller than the first threshold value and lower than the first threshold value, and brings the luminance values lower than the second threshold value into correspondence with the same luminance .

The image processing apparatus is configured in such a manner that the pixel extracting unit extracts pixels having a color saturation larger than a third threshold value and does not extract pixels having a color saturation smaller than the third threshold value when extracting pixels from the color image on the basis of the hue obtained from the chromaticity data. In this configuration, extraction processing is carried out only on the pixels having a color saturation larger than the third threshold value, and hence pixels having a small color saturation different from the user-specified hue are prevented from being extracted by mistake.

The image processing apparatus is configured to include a binarizing unit that compares the luminance value of the luminance data after the conversion processing by the luminance data converting unit with a fourth threshold value and, on the basis of the result of comparison, generates a binary data, so that the monochrome image including the binary data for each pixel is outputted.

The image processing apparatus is configured to include a luminance correcting unit that carries out processing to convert luminance values existing in a first range including the lower limit value in the luminance data after the conversion processing by the luminance data converting unit into the lower limit value, or to convert luminance values existing in a second range including the upper limit value into the upper limit value, so that the binarizing unit generates the binary data on the basis of the luminance data after the conversion processing by the luminance correcting unit.

The image processing apparatus is configured to include a peripheral area specifying unit that generates peripheral area specification information which specifies peripheral areas in a color space having a hue specified by the hue specification information on the basis of the hue specification information, so that the luminance data conversion unit converts the luminance data in the pixels in the peripheral areas specified by the peripheral area specification information with an increment of the luminance value smaller than the conversion processing to generate the monochrome image from the color image. In this configuration, since the conversion of the luminance data adequately achieved also in the pixels in the peripheral areas of the user-specified hue, the boundary between the user-specified hue and a hue close to the user-specified hue in the color space is restrained from having a high profile when printed as the monochrome image.

In order to achieve the second object, an image processing apparatus carries out image processing on a color image including luminance data and chromaticity data for each pixel read from an original and outputs a monochrome image. The image processing apparatus includes a hue specifying unit, a pixel extracting unit and a luminance data converting unit. The hue specifying unit generates hue specification information that specifies a hue to be converted on the basis of a user operation. The pixel extracting unit extracts pixels having the hue specified by the hue specification information from the color image on the basis of the hue obtained from the chromaticity data. The luminance data converting unit carries out processing to convert luminance on the luminance data of the pixels extracted by the pixel extracting unit using a function which lowers the upper limit value of luminance and increases in a monotone within a predetermined range including the upper limit value, so that the monochrome image is generated from the color image.

In this image processing apparatus, the hue specification information is generated on the basis of the user operation, and the pixels having a hue specified by the hue specification information are extracted from the color image read from the original. Then, processing to convert the luminance data of the extracted pixels is carried out, so that the monochrome image is generated from the color image. The luminance data conversion processing carried out by using a function which lowers the upper limit value of the luminance and increases in a monotone within the predetermined range including the upper limit value. In this configuration, since the pixels having the user-specified hue are printed densely when being printed as a monochrome image since the luminance value in the vicinity of the upper limit value is lowered, the corresponding portion is emphasized.

The image processing apparatus is configured in such a manner that the luminance data converting unit brings the luminance values into correspondence with values obtained by multiplying the luminance values by a constant value.

The image processing apparatus is configured in such a manner that the luminance data converting unit brings luminance values existing in a range from the lower limit value to the first threshold value into correspondence with the lower limit value, and brings the luminance values existing in a range from the first threshold value to the upper limit value into correspondence with values obtained by subtracting a constant value from the luminance values.

The image processing apparatus is configured in such a manner that the pixel extracting unit extracts pixels having a color saturation larger than the second threshold value and does not extract pixels having a color saturation smaller than the second threshold value when extracting pixels from the color image on the basis of the hue obtained from the chromaticity data. In this configuration, since the extraction processing is carried out ony on the pixels having a color saturation larger than the second threshold value, and hence pixels having a small color saturation different from the user-specified hue are prevented from being extracted by mistake.

The image processing apparatus is configured to include the binarizing unit that compares the luminance value of the luminance data after the conversion processing by the luminance data converting unit with the third threshold value and, on the basis of the result of comparison, generates the binary data, so that the monochrome image including the binary data for each pixel is outputted.

The image processing apparatus is configured to include a luminance correcting unit that carries out processing to convert luminance values existing in a first range including the lower limit value in the luminance data after the conversion processing by the luminance data converting unit into the lower limit value, or to convert luminance values existing in a second range including the upper limit value into the upper limit value, so that the binarizing unit generates the binary data on the basis of the luminance data after the conversion processing by the luminance correcting unit.

The image processing apparatus is configured in such a manner that the luminance data converting unit increases the luminance value for pixels other than those having a hue specified by the hue specification information.

The image processing apparatus is configured to include a peripheral area specifying unit that generates peripheral area specification information which specifies peripheral areas in a color space having a hue specified by the hue specification information on the basis of the hue specification information, so that the luminance data conversion unit converts the luminance data in the pixels in the peripheral areas specified by the peripheral area specification information with an increment of the luminance value smaller than the conversion processing to generate the monochrome image from the color image. In this configuration, since the conversion of the luminance data adequately achieved also in the pixels in the peripheral areas of the user-specified hue, the boundary between the user-specified hue and a hue close to the user-specified hue in the color space is restrained from having a high profile when printed as the monochrome image.

According to the image processing apparatus in the present invention, since the luminance data of the pixels having the user-specified hue are converted according to the luminance value thereof and the luminance values higher than the first threshold value is changed to the upper limit value of the luminance value, the boundary between black and white is restrained from having a high profile when being printed as a monochrome image. Since the luminance data of the pixels in the peripheral area having the user-specified hue is adequately converted, the boundary between the user-specified hue and a hue close to the user-specified hue in the color space is restrained from having a high profile when printed as the monochrome image. Therefore, the image processing apparatus is able to whiten the specific color adequately when printing the color image read from the original in monochrome without causing an unpleasant feeling.

According to the image processing apparatus in the present invention, since the luminance value of the pixels having the user-specified hue is lowered, a specific hue is printed densely when being printed as a monochrome image, so that the corresponding portion can be emphasized. Since the conversion of the luminance data is adequately achieved also for the pixels in the peripheral areas of the user-specified hue, the boundary between the user-specified hue and a hue close to the user-specified hue in the color space is restrained from having a high profile when printed as the monochrome image. Therefore, the portion written in a specific color is emphasized when printing the color image read from the original in monochrome.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram showing an example of a general configuration of an image processing apparatus according to a first embodiment of the present invention, illustrating a digital multifunction peripheral 100 as an example of the image processing apparatus.

Fig. 2 is a block diagram showing an example of the configuration of a color scanner unit 10 in the digital multifunction peripheral 100 in Fig. 1.

Fig. 3 is a block diagram showing an example of the configuration of a principal portion of the digital multifunction peripheral 100 in Fig. 1, illustrating an example of the functional configuration of an image processing unit 20.

Fig. 4 is a block diagram showing an example of the configuration of a monochrome image generating unit 23 in the image processing unit 20 in Fig. 3.

Fig. 5 illustrates an example of operation of the image processing unit 20 in Fig. 3, illustrating a color space used when allowing a user to specify a hue.

Fig. 6 illustrates an example of the operation of the image processing unit 20 in Fig. 3, illustrating a hue area A1 specified by the user and peripheral areas A2.

Fig. 7 illustrates an example of the operation of the image processing unit 20 in Fig. 3, shown by graphs B2 and B3 which represent a conversion table used for whitening.

Fig. 8 illustrates an example of the operation of the image processing unit 20 in Fig. 3, shown by a graph C1, which represents a conversion table used for correcting the luminance for removing noise.

Fig. 9 is a flowchart of an example of the operation of the image processing unit 20 in Fig. 3.

Fig. 10 illustrates an example of the operation of the image processing unit 20 in Fig. 3, shown by a graph B4 which represents another example of the conversion table used for whitening.

Fig. 11 illustrates an example of the operation in the image processing unit 20 in Fig. 3, shown by a graph B5, which represents another example of the conversion table used for whitening.

Fig. 12 illustrates an example of the operation of the image processing apparatus according to a second embodiment of the present invention, shown by graphs D1 and D2 which represent conversion tables used for hue emphasis.

Fig. 13 illustrates an example of the operation of the image processing apparatus according to the second embodiment of the present invention, shown by a graph D3 which represents another example of the conversion table used for the hue emphasis.

### DETAILED DESCRIPTION OF PREFERRED EMBODIMENTS

### First Embodiment

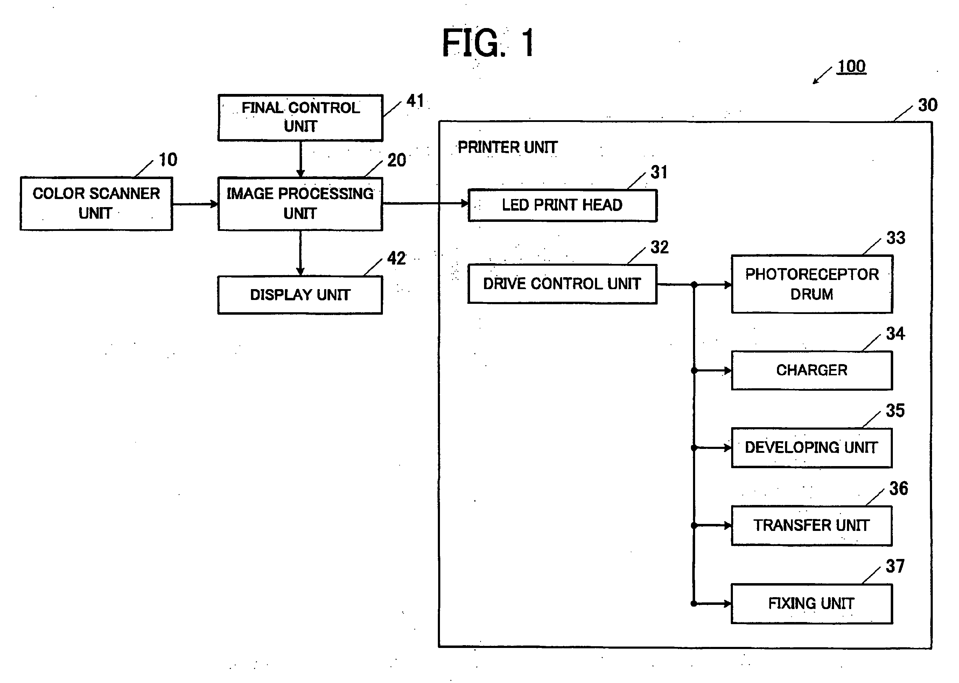

Fig. 1 is a block diagram showing an example of a general configuration of an image processing apparatus according to a first embodiment of the present invention, illustrating a digital multifunction peripheral 100 including a color scanner unit 10, an image processing unit 20 and a printer unit 30 as an example of the image processing apparatus. The color scanner unit 10 is an image pickup apparatus for generating an image data by irradiating an original to be read with light and receiving reflected light from the original. It is assumed here that manually written characters or printing patterns on the original are read by scanning the original (paper) with irradiated light in the paper feeding direction thereof. It is also assumed that a color image data including luminance data for at least three different colors is generated.

The image processing unit 20 carries out processing to generate a monochrome image data by changing the luminance value of luminance data of color image data read from the original by the color scanner unit 10, and then carries out an operation to output the generated monochrome image data to the printer unit 30. The processing to change the luminance value is carried out on the basis of a user-specified hue. The image processing unit 20 displays an input screen on a display unit 42 for allowing the user to specify the hue, and the hue is specified on the basis of an input signal from a final control unit 41.

The printer unit 30 is an output device for outputting the monochrome image data, and includes an LED print head 31, a drive control unit 32, a photoreceptor drum 33, a charger 34, a developing unit 35, a transfer unit 36 and a fixing unit 37. The LED print head 31 includes an LED array having a plurality of LEDs (light Emitting Diodes) linearly arranged, and carries out an operation to irradiate the photoreceptor drum 33 with light on the basis of the monochrome image data supplied from the image processing unit 20.

The drive control unit 32 controls a printer mechanism including the photoreceptor drum 33, the charger 34, the developing unit 35, the transfer unit 36 and the fixing unit 37. The photoreceptor drum 33 is a cylindrical rotating body formed with a photoreceptive layer on the surface thereof, and is charged by the charger 34 uniformly on the surface thereof during the printing job. An electrostatic latent image is formed by irradiating the surface of the photoreceptor drum 33 charged in this manner with light.

The developing unit 35 carries out an operation to form a toner image by attaching a toner on the surface of the photoreceptor drum 33 on which the electrostatic latent image is formed. The transfer unit 36 carries out an operation to transfer the toner image formed on the surface of the photoreceptor drum 33 to a print sheet. The fixing unit 37 carries out an operation to heat and pressurize the print sheet on which the toner image is transferred to fix the monochrome image onto the surface of the print sheet.

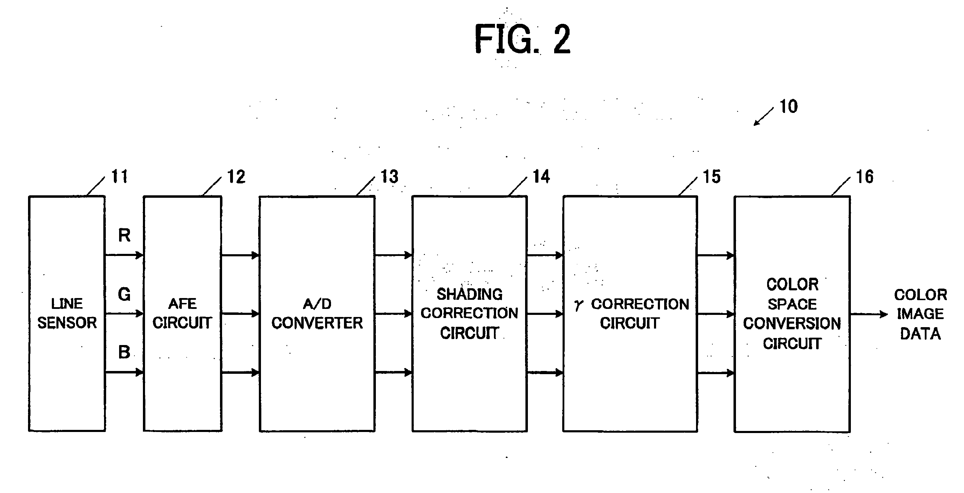

Fig. 2 is a block diagram showing an example of the configuration of the color scanner unit 10 in the digital multifunction peripheral 100 in Fig. 1. The color scanner unit 10 includes a line sensor 11, an AFE (Analog Front End) circuit 12, an A/D converter 13, a shading correction circuit 14, a γ correction circuit 15 and a color space conversion circuit 16. The line sensor 11 includes a light receiving element array in which a plurality of light receiving elements such as CCD (Charge Coupled Device) arranged on a straight line L, and carries out an operation to generate an analogue signal which represents the received light amount (luminance), for example, voltage signals for respective colors of R (red), G (green) and B (blue).

The AFE circuit 12 is an amplifier that adjusts the voltage level of analogue signals supplied from the line sensor 11 and outputs the same to the A/D converter 13. The A/D converter 13 is a converting element that samples the analogue signals supplied from the AFE circuit 12 at a predetermined sampling rate, and generates digital data. It is assumed here that the luminance data including 8 bit (256 tones) data are generated for the respective colors of R, G and B.

The shading correction circuit 14 is a digital processing circuit that carries out processing to correct the luminance data for standardizing the amount of received light for the respective pixels in the line sensor 11. More specifically, a plurality of objects being formed in advance for correcting the shading and arranged in the line direction (the direction of the straight line L) and each having a known reflection coefficient, that is, so-called "white reference" or "black reference" are read by the line sensor 11. On the basis of the luminance data which is obtained in this operation and the reflection coefficient information of the objects, the luminance data read newly from the original is corrected. Accordingly, variations in brightness of the light sources for reading the original in the line direction (the direction of the straight line L), the influence of lowering of the amount of peripheral light at the light collecting lens for irradiation, or variations in line direction according to the light receiving sensitivity of the line sensor 11 are corrected.

The γ correction circuit 15 is a digital processing circuit that carries out γ correction processing to apply color adjustment for the luminance data of the R, G and B supplied from the shading correction circuit 14. For example, the color adjustment of the luminance data is carried out on the RGB color space which depends on the device on the code of the color specification system of International Organization for Standardization "sRGB (standard RGB) color specification system". The RGB color space is a color space used for expressing additive color mixing using three primaries of light (R, G, B), and the color becomes whiter with increase in value. The sRGB color specification system is employed in various types of image input/output equipment such as scanners, digital cameras, printers and monitors, and the difference in color between input and output is reduced by the color adjustment on the code of the sRGB color specification system.

The color space conversion circuit 16 is a digital processing circuit for converting the color space and output the color image data for the R, G, B luminance data supplied from the γ correction circuit 15. More specifically, processing to convert the RGB color space into a color space composed of the luminance and the hue, for example, YCbCr color specification system, is carried out. The YCbCr color specification system is a color specification system used for the JPEG image data and the like, in which Y designates the luminance data and CbCr designates the chromaticity data, respectively. In the chromaticity data CbCr, Cb designates the differential in blue (hue component) and Cr designates the differential in red (hue component), respectively. The color space conversion circuit 16 generates the color image data including the luminance data and the chromaticity data for each pixel.

In stead of converting into the YCbCr color specification system, conversion to Lab color specification system which is one of the uniform color spaces may be employed. In the Lab color specification system, L designates the luminance data and ab designates the chromaticity data, respectively. In the chromaticity data ab, a and b designate hue components, respectively. The L component in the Lab color specification system is generally referred to as lightness. It is assumed that the luminance data in this specification includes the L component data of the Lab color specification system, that is, the lightness data.

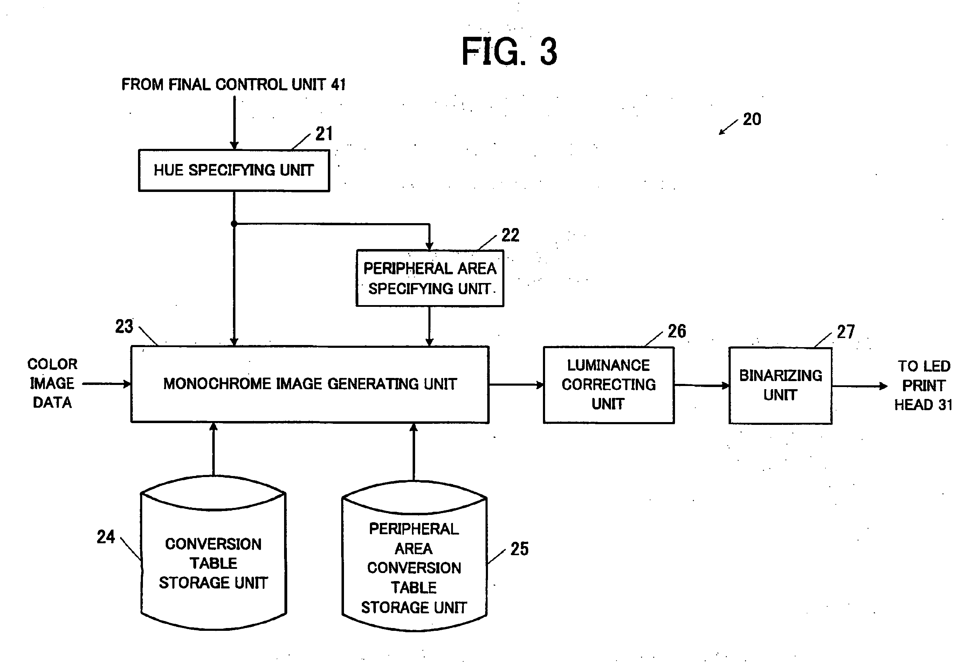

Fig. 3 is a block diagram showing an example of the configuration of a principal portion of the digital multifunction peripheral 100 in Fig. 1, illustrating an example of the functional configuration of the image processing unit 20. The image processing unit 20 includes a hue specifying unit 21, a peripheral area specifying unit 22, a monochrome image generating unit 23, a conversion table storage 24, a peripheral area conversion table storage 25, a luminance correcting unit 26 and a binarizing unit 27. The hue specifying unit 21 carries out an operation to generate hue specification information that specifies the hue whose luminance value is to be converted on the basis of the user operation.

In this hue specification, the different hue components in the YCbCr color specification system Cb and Cr can be specified independently. It is assumed here that the color space is divided into a plurality of hue areas in advance, and one of these hue areas is selected by the user.

The peripheral area specifying unit 22 carries out an operation to generate peripheral area specification information for specifying the peripheral areas in the color space of a hue specified by the hue specification information on the basis of the color specifying information from the hue specifying unit 21. The peripheral areas specified by the peripheral area specification information are areas which are not overlapped with the user-specified hue area.

The conversion table storage 24 is a memory for storing a conversion table which saturate luminance values higher than the first threshold value and increase luminance values lower than the first threshold value. The conversion table gives correspondence information which defines correspondence of the luminance values, and it is assumed here that a conversion table which lists input values of luminance before conversion processing existing in a range from the lower limit value to the first threshold value and corresponding output values of luminance after the conversion processing obtained by multiplying these input values by a constant value is stored in advance.

The peripheral area conversion table storage 25 is a memory for storing a peripheral area conversion table in which the increment of the luminance value is smaller than the conversion table.

The monochrome image generating unit 23 carries out processing to extract pixels from the color image data on the basis of the hue specification information and the peripheral area specification information, and convert the luminance data of the extracted pixels on the basis of the conversion table and the peripheral area conversion table to generate the monochrome image. data.

The luminance correcting unit 26 carries out processing to correct the luminance for removing noise from the monochrome image data from the monochrome image generating unit 23. More specifically, the luminance correcting unit 26 carries out processing to convert the luminance values existing in a first range including the lower limit value to the lower limit value, and convert the luminance values existing in a second range including the upper limit value to the upper limit value.

The hue determination, that is, the determination of the hue area to which the hue indicated by the chromaticity data belongs is achieved accurately by performing the processing to extract pixels from the color image and convert the luminance data to generate the monochrome image before the processing to correct the luminance.

The binarizing unit 27 carries out processing to binarize the luminance data after the conversion processing by the luminance correcting unit 26 by reducing the number of tones. More specifically, the luminance values of the luminance data are compared with a predetermined threshold value (the fourth threshold value) and, on the basis of the result of comparison, the binary data is generated. The monochrome image data generated by the binarizing unit 27 and including the binary data for each pixel is outputted to the LED print head 31.

It is assumed here that pseudo tone display processing (halftone display processing) such as a dither method is carried out to reproduce the change of monochrome multi-valued tone in binary when binarizing the luminance component. The pseudo tone display processing is image processing of a type in which the threshold values for binarization are determined on a block basis including a plurality of pixels to obtain the monochrome image data.

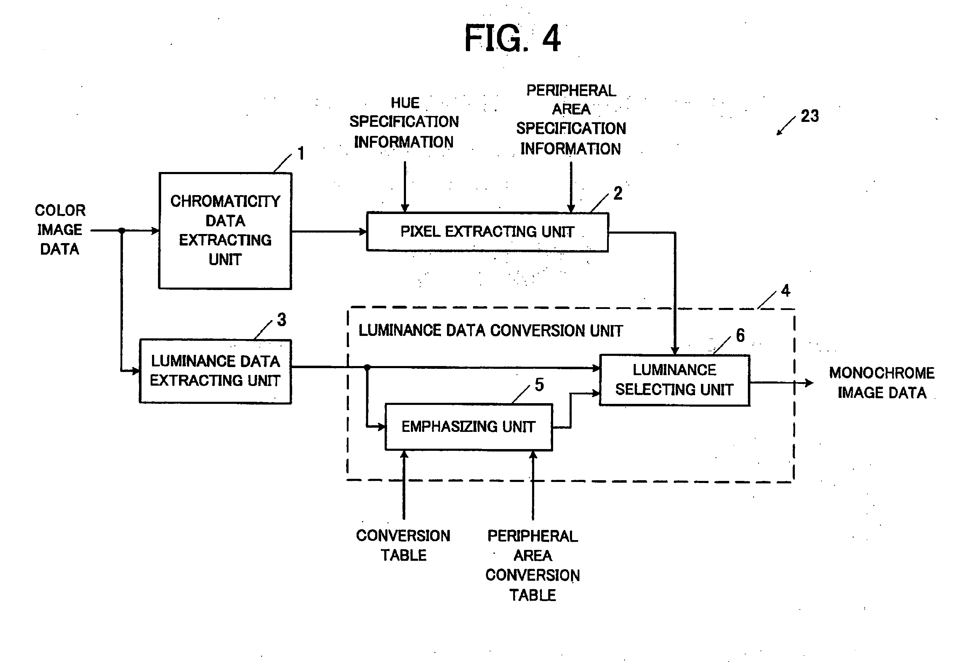

Fig. 4 is a block diagram showing an example of the configuration of the monochrome image generating unit 23 in the image processing unit 20 in Fig. 3. The monochrome image generating unit 23 includes a chromaticity data extracting unit 1, a pixel extracting unit 2, a luminance data extracting unit 3 and a luminance data conversion unit 4. The chromaticity data extracting unit 1 carries out an operation to extract chromaticity data from the color image data. More specifically, the chromaticity data CbCr is extracted from the color image data (YCbCr here) generated in the color space conversion circuit 16 and is outputted to the pixel extracting unit 2.

The pixel extracting unit 2 carries out an operation to extract pixels having a hue specified by the hue specification information and the peripheral area specification information on the basis of the chromaticity data CbCr from the chromaticity data extracting unit 1.

More specifically, the hue area in the color space to which the pixels in question belong to is determined on the basis of the hue component contained in the chromaticity data CbCr, and pixels which correspond to the user-specified hue area are extracted. Pixels which correspond to the hue area specified by the peripheral area specification information are also extracted.

The luminance data extracting unit 3 carries out an operation to extract the luminance data from the color image data. More specifically, the luminance data Y is extracted from the color image data YCbCr generated in the color space conversion circuit 16 and is outputted to the luminance data conversion unit 4.

The luminance data conversion unit 4 includes an emphasizing unit 5 and a luminance selecting unit 6, and carries out an operation to convert the luminance data of pixels extracted by the pixel extracting unit 2 on the basis of the conversion table and generate monochrome image data from the color image data.

The emphasizing unit 5 carries out processing to convert the luminance data Y on the basis of the conversion table read from the conversion table storage 24 and the peripheral area conversion table read from the peripheral area conversion table storage 25, and generates a first luminance data and a second luminance data increased in luminance value. More specifically, the first luminance data is generated by converting the luminance value according to the conversion table. The second luminance data is generated by converting the luminance value according to the peripheral area conversion table.

The luminance selecting unit 6 carries out an operation to select the luminance data on the basis of the pixel extraction information from the pixel extracting unit 2 and output the same as the monochrome image data. More specifically, the first luminance data is selected for the pixels extracted on the basis of the hue specification information and the second luminance data is selected on the basis of the pixels extracted for the peripheral area specification information. The luminance data Y is selected for pixels which are not extracted by the pixel extracting unit 2.

In the first embodiment, the conversion table which defines correspondence of the luminance value is used for carrying out the conversion processing on the luminance data of the pixels extracted by the pixel extracting unit 2. However, it is also possible to employ processing on the basis of hardware using an arithmetic circuit instead of the processing on the basis of software as described above.

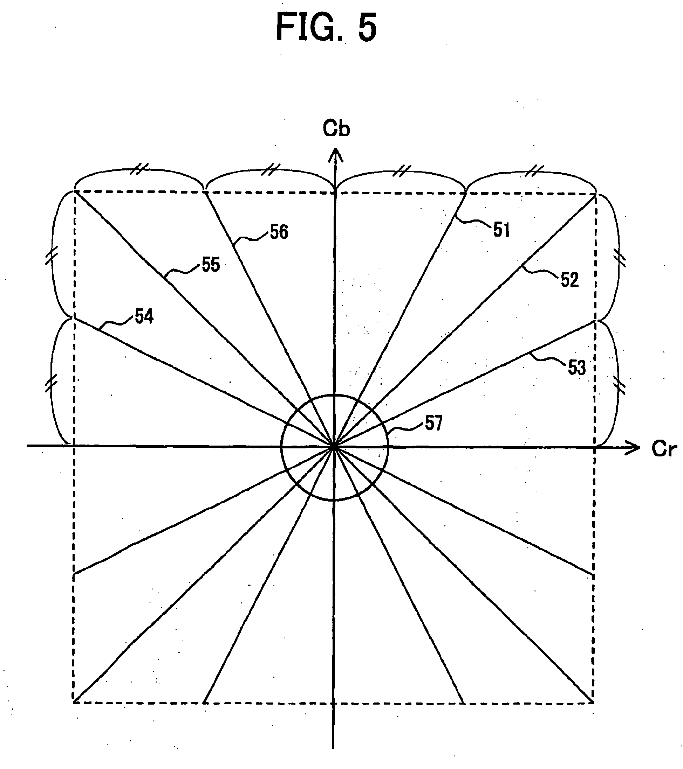

Fig. 5 illustrates an example of operation of the image processing unit 20 in Fig. 3, illustrating the color space used when allowing the user to specify the hue. The color space is the color space of YCbCr color specification system with the value Cb as the vertical axis and the value Cr as the lateral axis. The larger the Cb component, the stronger the tincture of blue becomes, and the smaller the Cb component, the stronger the tincture of yellow becomes. In contrast, the larger the Cr component, the stronger the tincture of red becomes, and the smaller the Cr component, the stronger the tincture of green becomes.

It is assumed here that the color space is divided into sixteen hue areas by six straight lines 51 to 56 passing the original point, and Cb axis and Cr axis. The input range of the Cb component and the input range of the Cr component are assumed to be identical.

The straight line 51 represents a straight line with an inclination of 2, Cb=2Cr, the straight line 52 represents a straight line with an inclination of 1, Cb=Cr, the straight line 53 represents a straight line with an inclination of 1/2, Cb= (1/2) Cr, respectively. The straight line 54 represents a straight line with an inclination of (-1)/2, (-2)Cb=Cr, the straight line 55 represents a straight line with an inclination of (-1), Cb=-Cr, and the straight line 56 represents a straight line with an inclination of (-2), Cb=(-2)Cr, respectively. The respective hue areas divided by these straight lines 51 to 56 have the same surface area.

The area near the original point of the color space is an achromatic color area 57 in which the absolute value of the hue component is small. The achromatic color (monotone) area 57 is an area showing a hue with low color saturation, and is defined by a predetermined relational equation established between the hue components Cb and Cr. In this example, the achromatic color area 57 is shown as the inside the circle about the original point.

The achromatic color area 57 as described above is excluded from the hue as the target of conversion of the luminance value. That is, when extracting pixels from the color image on the basis of the chromaticity data, only pixels having a color saturation larger than a predetermined threshold value (third threshold value) are extracted, and pixels having a color saturation smaller than the third threshold value are not extracted.

The hue area and the peripheral areas to be whitened from the monochrome image by changing the luminance value are specified for such color space.

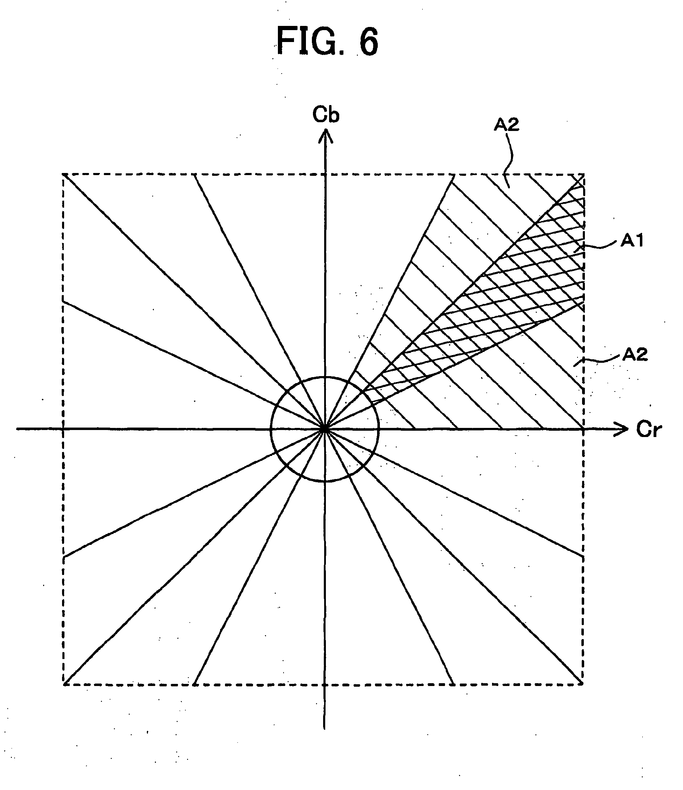

Fig. 6 is a drawing of an example of the operation of the image processing unit 20 in Fig. 3, illustrating a hue area A1 specified by the user and peripheral areas A2. In this example, the hue area A1 between the straight line 52 and the straight line 53 in a first quadrant is specified by the user, and two hue areas adjacent to the hue area A1 are specified as the peripheral areas A2. That is, the peripheral areas A2 are automatically specified on the basis of the position or the division in the color space of the hue area A1 when one hue area A1 is specified by the user.

The monochrome image generating unit 23 carries out processing to convert the luminance data of pixels whose hue belongs to the hue area A1 on the basis of the conversion table and convert the luminance data of pixels whose hue belongs to the peripheral areas A2 on the basis of the peripheral area conversion table.

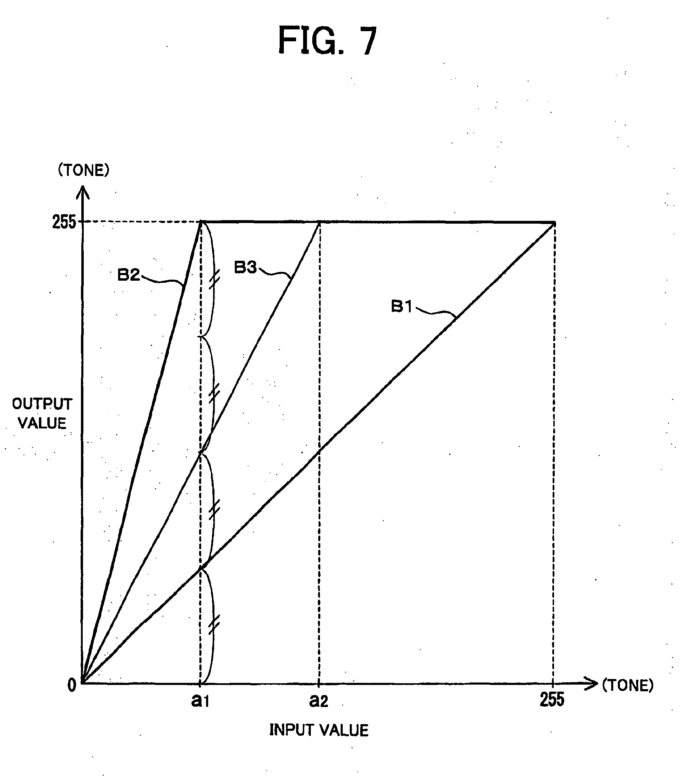

Fig. 7 illustrates an example of the operation of the image processing unit 20 in Fig. 3, shown by graphs B2 and B3 which represent a conversion table used for changing the luminance value and whitening the specific hue. A graph B1 is a straight line with an inclination of 1, and is a correspondence graph which brings the input values of luminance into correspondence with the output values of the same luminance.

The graph B2 is a sequential line showing the conversion table of pixels which belong to the user-specified hue area, which brings the input values of luminance within a range from a first threshold value a1 to the upper limit value of luminance (saturated value) 255 into correspondence with the output value 255. The graph B2 also brings the input values of luminance within a range from the lower limit value of luminance 0 to the first threshold value a1 into correspondence with the output values increased in proportion to the luminance.

In this example, the coefficient of proportionality (the inclination of the straight line) of the graph B2 in the range from the lower limit value 0 to the first threshold value a1 is "4", and a quarter the upper limit value 255 corresponds to the first threshold value a1.

The graph B3 is a sequential line showing the peripheral area conversion table used for converting the luminance data of pixels which belong to the peripheral area, and the increment of the luminance value is smaller than that of the graph B2. More specifically, the input values of luminance within a range from a threshold value a2 to the upper limit value 255 are brought into correspondence with an output value of 255, and the input values of luminance within a range from the lower limit value 0 to the threshold value a2 (>a1) are brought into correspondence with the output value incremented in proportional to the luminance. The coefficient of proportionality of the graph B3 in the range from the lower limit value 0 to the threshold value a2 is larger than "1", which is smaller than the coefficient of proportionality of the graph B2.

In this example, the proportional coefficient of the graph B3 in the range from the lower limit value 0 to the threshold value a2 is "2", and half the upper limit value 255 corresponds to the threshold value a2.

The monochrome image generating unit 23 carries out processing to convert the luminance data on the basis of the conversion table shown by these graphs B2 and B3, so that the luminance data after the conversion processing is outputted as the monochrome image data.

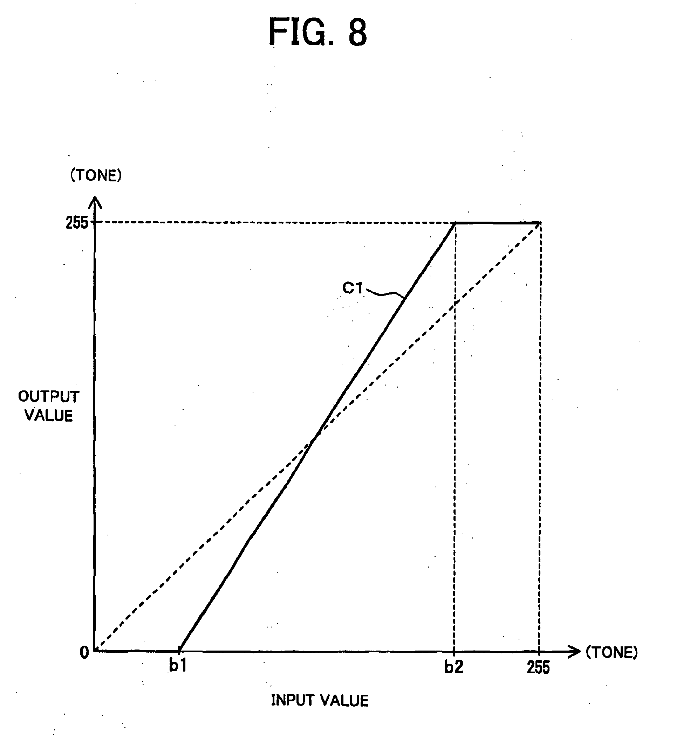

Fig. 8 illustrates an example of the operation of the image processing unit 20 in Fig. 3, shown by a graph C1, which represents a conversion table used for correcting the luminance for removing noise. The graph C1 brings luminance values existing within a first range including the lower limit value 0 of luminance, that is, within a range from 0 to b1 inclusive into correspondence with the lower limit value 0, and brings luminance values existing within a second range including the upper limit value 255, that is, within a range from b2 to 255 inclusive into correspondence with the upper limit value 255. The graph C1 brings luminance values within a range from b1 to b2 inclusive into correspondence with luminance values obtained by multiplying the difference with respect to b1 by a constant value.

The luminance correcting unit 26 carries out conversion processing on the basis of the conversion table shown by the graph C1 as described above for the monochrome image data generated by the monochrome image generating unit 23. Since the luminance values close to the upper limit value are saturated and the luminance values close to the lower limit value are converted to the lower limit value by correcting the luminance on the basis of such conversion table, the generation of black portions scattered in a white area as a noise, or generation of white portions scattered in a black area as a noise is restrained.

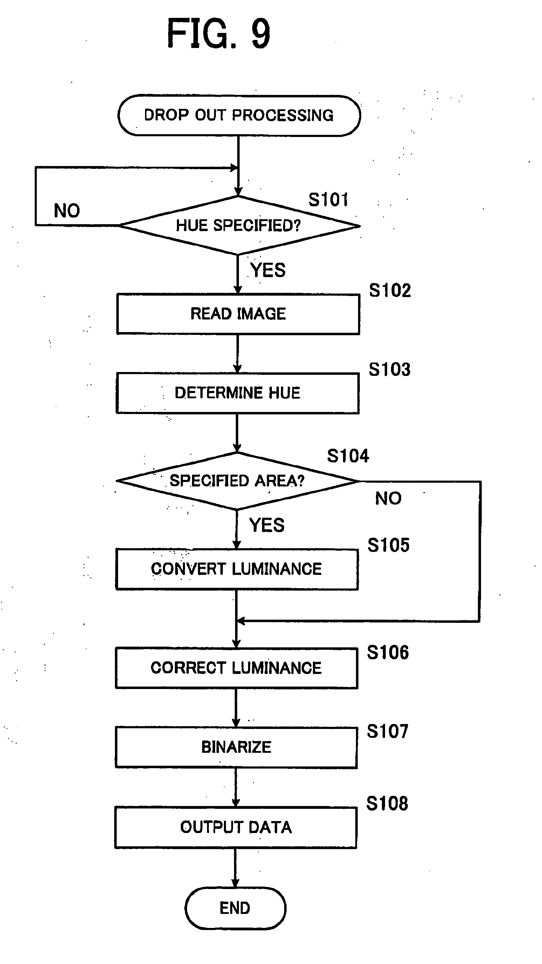

Steps S101 to S108 in Fig. 9 is a flowchart of an example of the operation in the image processing unit 20 in Fig. 3. The hue specifying unit 21 generates hue specification information when the hue area whose luminance value is to be converted is specified by the user (Step S101). The peripheral area specifying unit 22 generates peripheral area specification information on the basis of the hue specification information when the hue specification information is supplied from the hue specifying unit 21.

Subsequently, when the hue specification information and the peripheral area specification information are supplied, the monochrome image generating unit 23 reads the color image data from the color scanner unit 10, determines whether or not pixels are those which belong to the specified area on the basis of the hue component of the chromaticity data, and extracts pixels which belong to the hue area specified by the hue specification information and pixels which belong to the peripheral areas specified by the peripheral area specification information (Steps S102 to S104).

At this time, the monochrome image generating unit 23 carries out conversion processing of luminance on the basis of the conversion table on the luminance data of the extracted pixels and generates the monochrome image data (Step S105).

Subsequently, when the monochrome image data is supplied from the monochrome image generating unit 23, the luminance correcting unit 26 carries out processing to correct the luminance for removing noise from the monochrome image data (Step S106). The binarizing unit 27 then carries out processing to reduce the number of tones on the monochrome image data after correction, and outputs the same as binary data (Steps S107, S108)

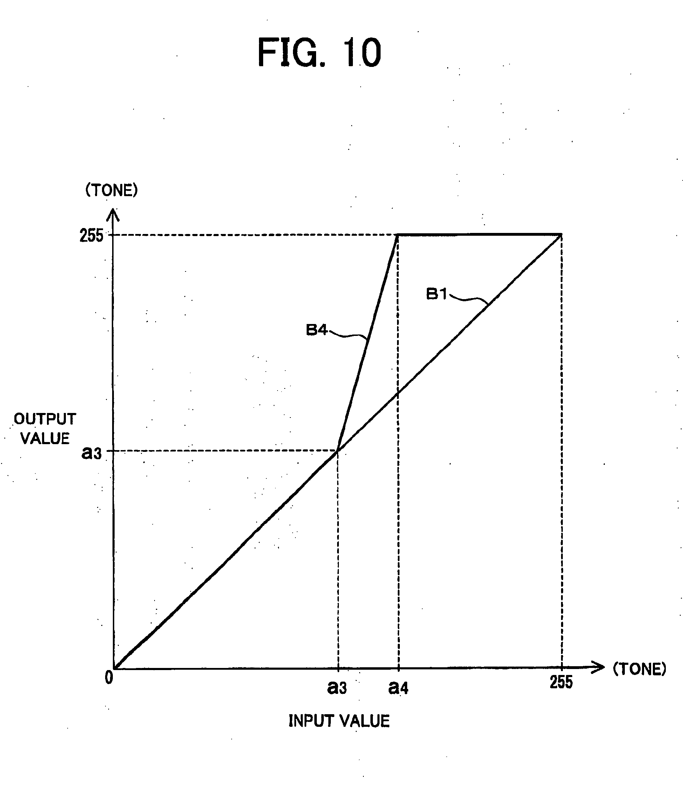

Fig. 10 illustrates an example of the operation of the image processing unit 20 in Fig. 3, shown by a graph B4 which represents another example of the conversion table used for changing the luminance value and whitening the specific hue. The graph B4 is a sequential line showing the conversion table for pixels which belong to the user-specified hue area. The graph B4 brings input values of luminance within a range from a first threshold value a4 to the upper limit value 255 into correspondence with the output value 255, increases input values of luminance higher than a second threshold value a3 (128 for example) which is smaller than the first threshold value a4 and lower than the first threshold value a4, and brings input values of luminance within a range from the lower limit value 0 to the second threshold value a3 into correspondence with the same luminance.

Here, the input values of luminance within a range from the second threshold value a3 to the first threshold value a4 are brought into correspondence with the output values obtained by multiplying the difference with respect to the threshold value a3 by a constant value. That is, the inclination of the straight line of the graph B4 is changed in two steps in a range from the lower limit value 0 and the first threshold value a4.

The luminance data may be converted using the conversion table shown by the graph B4 as described above, in which the inclination is changed in multiple steps between the lower limit value of luminance and the first threshold value. In this configuration, when the luminance data is changed for pixels having the user-specified hue, the luminance value within a range from the lower limit value to the first threshold value is changed in multiple stages, and hence the boundary between black and white is restrained effectively from having a high profile when printed as the monochrome image.

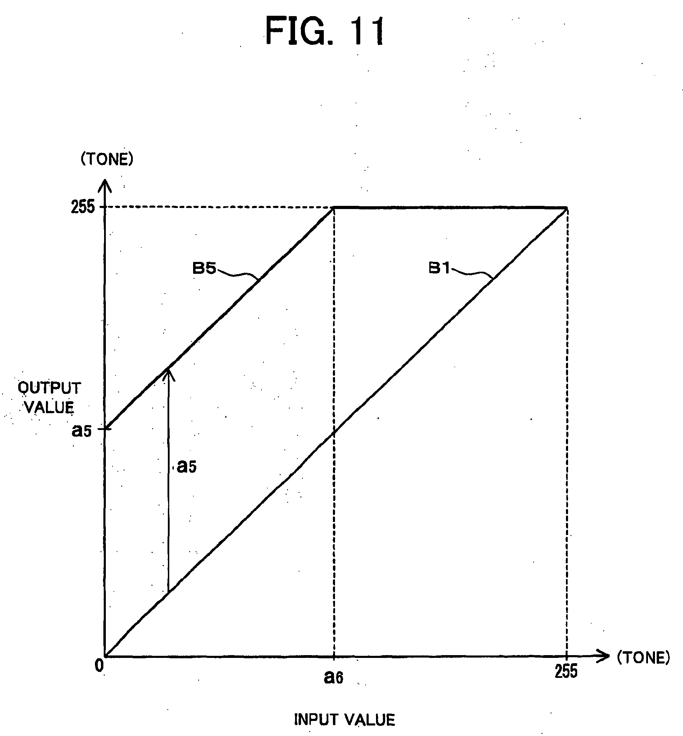

Fig. 11 illustrates an example of the operation in the image processing unit 20 in Fig. 3, in which graph B5 represents another example of the conversion table used for changing the luminance value and whitening the specific hue. The graph B5 is a sequential line showing the conversion table for pixels which belong to the user-specified hue area. The graph B5 brings input values of luminance within a range from a first threshold value a6 to the upper limit value 255 into correspondence with the output value 255, and brings input values x of luminance within a range from the lower limit value 0 to the first threshold value a6 into correspondence with the output values (x+a5) increased by a constant value a5.

In the graph B5, the first threshold value a6 satisfies a relation of a6+a5=255. The luminance data may be converted using the conversion table shown by the graph B5 as described above.

According to the first embodiment, the luminance data of the pixels which belong to the user-specified hue area is changed according to the luminance value thereof and the luminance values higher than the first threshold value are changed to the upper limit value of luminance. Therefore, the boundary between black and white is restrained from having a high profile when being printed as the monochrome image, and the specific hue can be whitened.

More specifically, in a case in which characters or the like are written in a writing paper with a pen in the same color as guide lines or template preprinted in a pale color, for example, in red of high lightness (luminance), it is assumed that only the preprinted guide lines or the template is whitened to print a monochrome image without whitening characters written manually with a pen or objects printed in black. In the digital multifunction peripheral 100 according to the first embodiment, the preprinted guide lines or the template can be adequately whitened while remaining the manually written characters utilizing the fact that the characters written with a pen on the writing paper is low in luminance (dense) in comparison with the preprinted guide lines or the like.

According to the first embodiment, since the extracting processing is carried out only on pixels having a larger color saturation than the third threshold value, pixels having a smaller color saturation different from the user-specific hue area are prevented from being extracted by mistake.

Since the luminance data of pixels in the peripheral area of the user-specified hue area is also converted according to the peripheral area conversion table, the boundary between the user-specified hue and a hue which is close to the user-specified hue in the color space is restrained from having a high profile when being printed as a monochrome image.

In the first embodiment, the case in which the present invention is applied to a digital multifunction peripheral having a scanner function for reading a color image from an original and a printer function for printing a monochrome image obtained from the read color image on a print sheet has been described as an example. However, the present invention is not limited thereto. For example, the present invention is also applicable to an image reading apparatus having only a scanning function, or a printing apparatus having only a printer function. The present invention is also applicable to a facsimile apparatus that converts the color image read from the original into monochrome image data, transmits the same to a destination and converts the color image data received from the other party into monochrome image data and prints the same on a print sheet.

In the first embodiment, the case in which either one of the graph B2 in Fig. 7, the graph B4 in Fig. 10 or the graph B5 in Fig. 11 is used as a conversion table used for whitening a specific hue by changing the luminance value has been described as an example. However, a configuration in which the conversion to be used for whitening can be switched to either one of the conversion tables shown by these graphs as needed is also applicable. Alternatively, a configuration in which a plurality of conversion tables having different correspondences of luminance values according to the hue areas are provided, so that a conversion table corresponding to the user-specified hue area, if specified, is used for carrying out conversion processing of the luminance value is also applicable.

In the first embodiment, the case in which the luminance data Y is selected for the pixels which are not extracted by the pixel extracting unit 2 has been described as an example. However, the present invention is not limited thereto. For example, a configuration in which processing to generate a third luminance data by converting the luminance data Y extracted by the luminance data extracting unit 3 and lowering the luminance value is carried out, so that the third luminance data is selected for pixels which are not extracted by the pixel extracting unit 2.

In the first embodiment, the case in which processing to extract pixels and convert the luminance data is carried out on the basis of the color image data YCbCr generated by the color space conversion circuit 16 has been described as an example. However, the present invention is not limited thereto, and may be applied to a configuration in which the color data on the basis of the RGB color space is supplied as the color image data. When the RGB data is supplied as the color image data, the chromaticity data extracting unit 1 calculates the differences of color component (G-R) and (G-B) on the basis of the RGB data, and outputs the results as the chromaticity data. The luminance data extracting unit 3 extracts G component from the RGB data, and is outputted as the luminance data.

### Second Embodiment

In the first embodiment, the case in which the luminance value of pixels having the user-specified hue is increased to achieve whitening when being printed as a monochrome image has been described as an example. In contrast, in the second embodiment, a case of lowering the luminance value of pixels having the user-specified hue for emphasizing portions written in a specific color will be described.

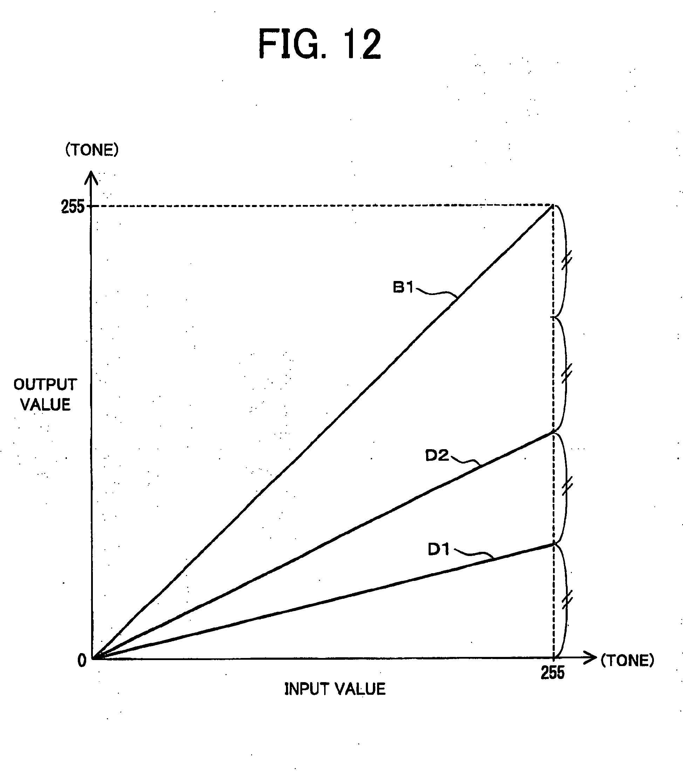

Fig. 12 illustrates an example of the operation of the image processing apparatus according to the second embodiment of the present invention, shown by graphs D1 and D2 which represent conversion tables used for changing the luminance value and emphasizing the specific hue. The image processing apparatus according to the second embodiment is different from the digital multifunction peripheral 100 according to the first embodiment only in the conversion table used when changing the luminance value of the pixels whose hue belong to a specific hue area. Other configurations are the same as the first embodiment.

The graph D1 is a straight line showing a conversion table used when changing the luminance value of pixels which belong to the user-specified hue area. The graph D1 brings input values of luminance within a range from the lower limit value 0 to the upper limit value (saturated value) 255 of luminance into correspondence with output values having been lowered in proportion to the luminance. That is, the graph D1 is a correspondence graph which brings luminance values into correspondence with values obtained by multiplying the luminance values by a constant value. In this example, the coefficient of proportionality (the inclination of the straight line) of the graph D1 is "1/4" and, for example, the input value 255 corresponds to integer number 63 or 64, which is close to 255/4 as the output value. It is assumed here that the input value and the output value are both integer numbers and, when the output value on the graph D1 corresponding to the input value is a decimal number, the fractions below decimal point are rounded up or down, or rounded off.

The graph D2 is a straight line showing a peripheral area conversion table used when changing the luminance value of pixels whose hue belong to the peripheral areas. The graph D2 is smaller in ratio of lowering of the luminance value in comparison with the graph D1. More specifically, the coefficient of proportionality of the graph D2 is smaller than one, and is larger than the coefficient of proportionality of the graph D1. In this example, the coefficient of proportionality of the graph D2 is "1/2" and, for example, the input value 255 is brought into correspondence with the output value 255/2.

The monochrome image generating unit 23 carries out processing to convert the luminance data on the basis of the conversion table shown by the graphs D1 and D2, and the luminance data after conversion processing is outputted as the monochrome data. The conversion table used for the processing to convert the luminance data as described above may be any type as long as the function for defining the correspondence of the luminous value within a predetermined range including the upper limit value 255 increases in a monotone.

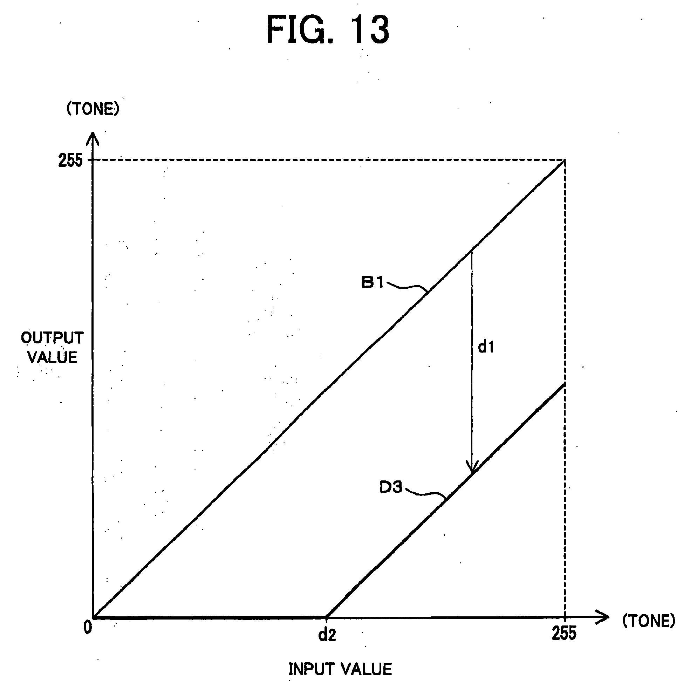

Fig. 13 illustrates an example of the operation of the image processing apparatus according to the second embodiment of the present invention, shown by a graph D3 which represents another example of the conversion table used for changing the luminance value and emphasizing the specific hue. The graph D3 is a sequential line showing a conversion table of pixels which belong to the user-specified hue area.

In the graph D3, input values of luminance within the range from the lower limit value 0 to the first threshold value d2 of luminance are brought into correspondence with the output value 0, and the input values x of luminance within the range from the first threshold value d2 to the upper limit value 255 are brought into correspondence with output values reduced by a constant value d1 (x-d1). That is, the graph D3 brings luminance values existing within the range from the lower limit value 0 to the first threshold value d2 into correspondence with the lower limit value 0, and luminance values existing within the range from the first threshold value d2 to the upper limit value 255 into correspondence with values obtained by reducing a constant value d1 from the luminance values.

In the graph D3, the first threshold value d2 satisfies a relation of d2-d1=0. The luminance data may be converted using the conversion table shown by the graph D3 as described above.

According to the second embodiment, since the luminance value of the pixels in the user-specified hue area is lowered, the specific hue is printed densely when being printed as a monochrome image, and the corresponding portion may be emphasized.

More specifically, specific portions such as characters written in red pen on an original having guide lines or a template preprinted in black may be emphasized when being printed. In particular, it is possible to increase density and emphasize the specific portions such as the characters written in red and decrease density of other portions printed in black when printing.

### Third Embodiment

In the second embodiment, the case in which the luminance values of the pixels in the user-specified hue area are lowered has been described as an example. In contrast, in the third embodiment, a case in which the luminance values of pixels which belong to the user-specified hue area is lowered, and the luminance values of pixels which do not belong to the hue area is increased will be described.

In the image processing apparatus according to the third embodiment, the luminance values of pixels which belong to the hue area specified by the hue specification information are changed on the basis of the conversion table. That is, processing to lower the luminance values is carried out on these pixels. On the other hand, processing to increase the luminance value is carried out for pixels which do not belong to the hue area specified by the hue specification information.

In this configuration, the luminance values for the pixels in the user-specified hue area are lowered, and the luminance values of other pixels are increased, so that the portions having a specific hue can be emphasized more when being printed as a monochrome image.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

## Claims

1. An image processing apparatus for carrying out image processing on a color image having luminance data and chromaticity data for each pixel read from an original and outputting a monochrome image, comprising:
a hue specifying unit that generates hue specification information which specifies a hue to be converted on the basis of a user operation;
a pixel extracting unit that extracts pixels having a hue specified by the hue specification information from the color image on the basis of the hue obtained from the chromaticity data; and
a luminance data converting unit that carries out conversion processing on the luminance data of pixels extracted by the pixel extracting unit to saturate luminance values higher than a first threshold value and increase luminance values lower than the first threshold value, so that the monochrome image is generated from the color image.

2. The image processing apparatus according to Claim 1, wherein the luminance data converting unit brings luminance values in a range from the lower limit value to the first threshold value into correspondence with values obtained by multiplying the luminance values by a constant value.

3. The image processing apparatus according to Claim 1, wherein the luminance data converting unit saturates the luminance values higher than the first threshold value, increases the luminance values higher than a second threshold value which is smaller than the first threshold value and lower than the first threshold value, and brings the luminance values lower than the second threshold value into correspondence with the same luminance.

4. The image processing apparatus according to Claim 1, wherein the pixel extracting unit extracts pixels having a color saturation larger than a third threshold value and does not extract pixels having a color saturation smaller than the third threshold value when extracting pixels from the color image on the basis of the hue obtained from the chromaticity data.

5. The image processing apparatus according to Claim 1 comprising:
a binarizing unit that compares the luminance value of the luminance data after the conversion processing by the luminance data converting unit with a fourth threshold value and, on the basis of the result of comparison, generates a binary data;
wherein the monochrome image including the binary data for each pixel is outputted.

6. The image processing apparatus according to Claim 5 comprising:
a luminance correcting unit that carries out processing to convert luminance values existing in a first range including the lower limit value in the luminance data after the conversion processing by the luminance data converting unit into the lower limit value, or to convert luminance values existing in a second range including the upper limit value into the upper limit value,
wherein the binarizing unit generates the binary data on the basis of the luminance data after the conversion processing by the luminance correcting unit.

7. The image processing apparatus according to Claim 1 comprising:
a peripheral area specifying unit that generates peripheral area specification information which specifies peripheral areas in a color space having a hue specified by the hue specification information on the basis of the hue specification information,
wherein the luminance data conversion unit converts the luminance data in the pixels in the peripheral areas specified by the peripheral area specification information with an increment of the luminance value smaller than the conversion processing to generate the monochrome image from the color image.

8. An image processing method for carrying out image processing on a color image having luminance data and chromaticity data for each pixel read from an original and outputting a monochrome image, comprising:
a hue specifying step for generating hue specification information which specifies a hue to be converted on the basis of a user operation;
a pixel extracting step for extracting pixels having the hue specified by the hue specification information from the color image on the basis of the hue obtained from the chromaticity data; and
a luminance data converting step for carrying out conversion processing on the luminance data of pixels extracted in the pixel extracting step to saturate luminance values higher than a first threshold value and increase luminance values lower than the first threshold value, so that the monochrome image is generated from the color image.

9. The image processing method according to Claim 8,
wherein pixels having a color saturation larger than a threshold value are extracted and pixels having a color saturation smaller than the threshold value are not extracted when extracting pixels in the pixel extracting step.

10. The image processing method according to Claim 8 comprising:
a peripheral area specifying step for generating peripheral area specification information which specifies peripheral areas in a color space having a hue specified by the hue specification information on the basis of the hue specification information,
wherein the luminance data conversion step converts the luminance data in the pixels in the peripheral areas specified by the peripheral area specification information with an increment of the luminance value smaller than the conversion processing to generate the monochrome image from the color image.

11. The image processing apparatus for carrying out image processing on a color image having luminance data and chromaticity data for each pixel read from an original and outputting a monochrome image comprising:
a hue specifying unit that generates hue specification information which specifies a hue to be converted on the basis of a user operation;
a pixel extracting unit that extracts pixels having the hue specified by the hue specification information from the color image on the basis of the hue obtained from the chromaticity data; and
a luminance data converting unit that carries out processing on the luminance data of the pixels extracted by the pixel extracting unit using a function which lowers the upper limit value of luminance and increases in a monotone within a predetermined range including the upper limit value to convert the luminance value, so that the monochrome image is generated from the color image.

12. The image processing apparatus according to Claim 11,
wherein the luminance data converting unit brings the luminance values into correspondence with values obtained by multiplying the luminance values by a constant value.

13. The image processing apparatus according to Claim 11,
wherein the luminance data converting unit brings luminance values existing in a range from the lower limit value to a first threshold value into correspondence with the lower limit value, and brings the luminance values existing in the range from the first threshold value to the upper limit value into correspondence with values obtained by subtracting a constant value from the luminance values.

14. The image processing apparatus according to Claim 11,
wherein the pixel extracting unit extracts pixels having a color saturation larger than a second threshold value and does not extract pixels having a color saturation smaller than the second threshold value when extracting pixels from the color image on the basis of the hue obtained from the chromaticity data.

15. The image processing apparatus according to Claim 11 comprising:
a binarizing unit that compares the luminance value of the luminance data after the conversion processing by the luminance data converting unit with a third threshold value and, on the basis of the result of comparison, generates a binary data,
wherein the monochrome image including the binary data for each pixel is outputted.

16. The image processing apparatus according to Claim 15 comprising:
a luminance correcting unit that carries out processing to convert luminance values existing in a first range including the lower limit value in the luminance data after the conversion processing by the luminance data converting unit into the lower limit value, or to convert luminance values existing in a second range including the upper limit value into the upper limit value,
wherein the binarizing unit generates the binary data on the basis of the luminance data after the conversion processing by the luminance correcting unit.

17. The image processing apparatus according to Claim 11,
wherein the luminance data converting unit increases the luminance value for pixels other than those having a hue specified by the hue specification information.

18. The image processing apparatus according to Claim 11 further comprising:
a peripheral area specifying unit that generates peripheral area specification information which specifies peripheral areas in a color space having a hue specified by the hue specification information on the basis of the hue specification information,
wherein the luminance data conversion unit converts the luminance data in the pixels in the peripheral areas specified by the peripheral area specification information with an increment of the luminance value smaller than the conversion processing to generate the monochrome image from the color image.

19. An image processing method for carrying out image processing on a color image having luminance data and chromaticity data for each pixel read from an original and outputting a monochrome image comprising:
a hue specifying step for generating hue specification information which specifies a hue to be converted on the basis of a user operation;
a pixel extracting step for extracting pixels having 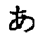 hue specified by the hue specification information from the color image on the basis of the hue obtained from the chromaticity data; and
a luminance data converting step for carrying out processing on the luminance data of the pixels extracted in the pixel extracting step using a function which lowers the upper limit value of luminance and increases in a monotone within a predetermined range including the upper limit value to convert the luminance value, so that the monochrome image is generated from the color image.

20. The image processing method according to Claim 19,
wherein pixels having a color saturation larger than a threshold value are extracted and pixels having a color saturation smaller than the threshold value are not extracted when extracting pixels in a pixel extracting step.
